# EUROPEAN PATENT APPLICATION

(11) **EP 3 115 234 A1**
(43) Date of publication of application: **11.01.2017**
(21) Application number: 16177672.9
(22) Date of filing: 02.07.2016
(51) Int. Cl.: B60G 7/00, B60G 3/04, B21D 53/88

(54) **A CONTROL ARM**

(30) Priority: 08.07.2015 TR 201508516
(71) Applicant: Coskunoz Kalip Makina Sanayi ve Ticaret A.S., 16140 Bursa (TR)
(72) Inventor: EFE, NIHAL, 16140 BURSA (TR); KAYA, MESUT, 16140 BURSA (TR)
(74) Representative: Sezgin, Hatice Özlem

(57) **Abstract**

It is related with a control arm made of sheet metal comprising an inner arm (11) connected to the vehicle chassis by means of at least a first connection point (20) provided on one side and at least a second connection point (30) provided on the other side and an outer arm (12) which is associated with the said inner arm (11) from the second connection point (30), wherein the control arm (10) is associated with the vehicle wheel from a loading point (40) defined in the other end of the outer arm (12). It newly includes at least one trailing edge (50) lying between the loading point (40) and the first connection point (20) and at least one level (51) running along the said trailing edge (50) essentially in line with the width of the trailing edge (50).

## Description

### TECHNICAL FIELD

The invention is related with the control arms used in the suspension systems of the vehicles.

### PRIOR ART

A control arm is one of the structural elements constituting the vehicles. A control arm is one of the suspension parts, which is linked to the vehicle chassis from two ends and to the wheel from one end. The control arm moves in harmony with the wheels of the vehicles. Therefore during the movement of the vehicles, the forces generated by the road conditions are imposed on the control arm.

A control arm should endure to the static loads with pre-determined sizes, based on the type of the vehicle. The material strength should be increased in order to enable the control arm to endure to the said static loads. However in this case, the energy absorption capability of the control arm decreases.

Consequently all the above mentioned problems necessitate a novelty in the related art.

### BRIEF DESCRIPTION OF THE INVENTION

This invention is related with a control arm which aims to eliminate the abovementioned disadvantages and to provide new advantages to the related art.

The main objective of the invention is to set forth a control arm whose resistance against static loads is increased.

Another objective of the invention is to set forth a control arm whose energy absorption capacity is increased.

In order to realize all the objectives, which are mentioned above and will be disclosed by the following detailed description, the present invention is related with a control arm made of sheet metal comprising an inner arm connected to the vehicle chassis by means of at least a first connection point provided on one side and at least a second connection point provided on the other side and an outer arm which is associated with the said inner arm from the second connection point, wherein the control arm is associated with the vehicle wheel from a loading point defined in the other end of the outer arm. Thereby it includes at least one trailing edge lying between the loading point and the first connection point and at least one level running along the said trailing edge essentially in line with the width of the trailing edge. Thereby the resistance of the control arm against the static loads increases. In other words when a static load is imposed on the control arm by means of the levels, more energy absorption by the control arm is provided as compared to the prior art.

In a preferred embodiment of the invention, the level is provided along the width of the control arm.

In another preferred embodiment of the invention, the level is made up of at least one recess.

In another preferred embodiment of the invention, said recesses are provided in multiple numbers with a predetermined distance among them.

In another preferred embodiment of the invention, there is at least one crossing bevel provided on at least one edge of the recesses.

### BRIEF DESCRIPTION OF THE FIGURES

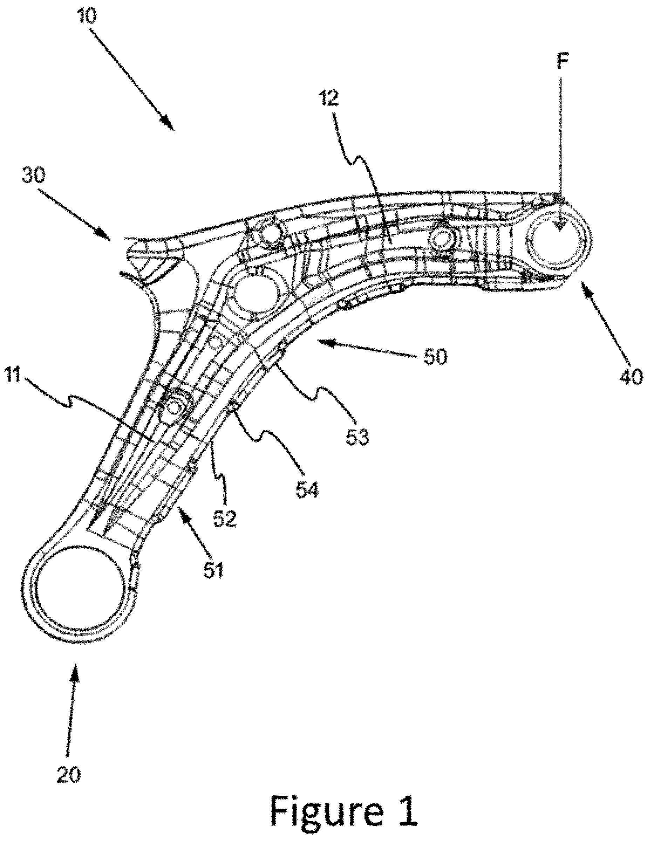

Figure 1 is a representative side view of the control arm of the invention.

### REFERENCE LIST

- 10: Control arm
- 11: Inner arm
- 12: Outer arm
- 20: First connection point
- 30: Second connection point
- 40: Loading point
- 50: Trailing edge
- 51: Level
- 52: Recess
- 53: Protrusion
- 54: Transition bevel

### DETAILED DESCRIPTION OF THE INVENTION

In this detailed description the control arm (10) of the invention is illustrated with the examples for better understanding of the subject without any limiting effects.

The control arm (10) of the invention in Figure 1 is obtained by bending the sheet metal. Accordingly the control arm (10) has at least one inner arm (11) and at least one outer arm (12). The mentioned inner arm (11) and the outer arm (12) are integral with each other. The control arm (10) has an L or boomerang shape. One end of the inner arm (11) is defined as the first connection point (20) and the other end is defined as the second connection point (30). The inner arm (11) is connected to the vehicle chassis from the first connection point (20) and the second connection point (30). The second connection point (30) also defines an end of the outer arm (12). The other end of the outer arm (12) is defined as a loading point (40). The outer arm (12) is associated with the wheel by the loading point (40). The edge of the control arm (10) running between the first connection point (20) and the loading point (40) is defined as a trailing edge (50). The said trailing edge (50) extends as an arc in the preferred embodiment of the invention.

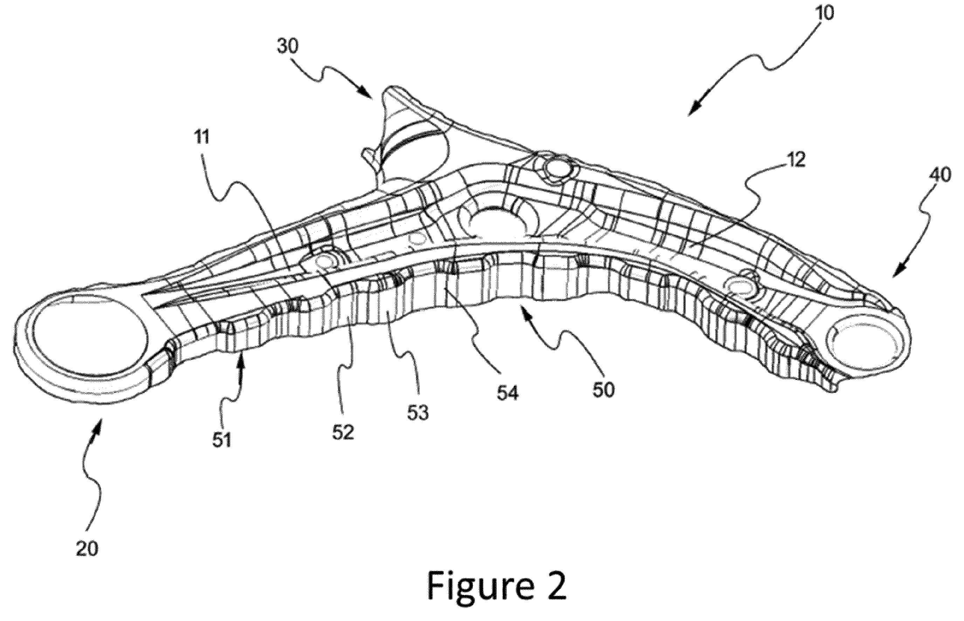

As will be seen in Figure 2, there is at least one level (51) provided above the trailing edge (50). Said level (51) has at least one protrusion (53) and at least one recess (52) provided consecutively. There are transition levels (54) on the connection parts of the protrusions (53) and the recesses (52). The transition bevels (54) and the levels (51) run along the width of the trailing edge (10). In other words along the trailing edge (50), there is a protrusion (53), a transition bevel (54) provided at the end of the protrusion (53), an recess (52) provided after the transition bevel (54), a transition bevel (54) provided after the recess (52) and a protrusion (53) provided following the transition bevel (54) and this arrangement continues in this way. Consequently a section similar to a trapezoid tooth is obtained along the trailing edge.

When the control arm (10) is located on the vehicle, a static load is formed on the loading point (40). During the formation of the said levels (51), the sheet metal is stretched and thereby the stress level is increased in such regions. High level of stress in the levels (51) on the trailing edge (50) increases the resistance of the control arm (10) against the static loads. In other words by means of the levels (51), when a static load is imposed on the control arm (10), the control arm is provided with a higher energy absorption as compared to the prior art.

The scope of protection of this invention is stated in the annexed claims and cannot be limited by the descriptions for exemplary purposes. Moreover it is obvious that a person skilled in the art can set forth similar embodiments in the light of the above without departing from the main theme of the invention.

## Claims

1. A control arm made of sheet metal comprising an inner arm (11) connected to the vehicle chassis by means of at least a first connection point (20) provided on one side and at least a second connection point (30) provided on the other side and an outer arm (12) which is associated with the said inner arm (11) from the second connection point (30), wherein the control arm (10) is associated with the vehicle wheel from a loading point (40) defined in the other end of the outer arm (12), **characterized in that** it includes at least one trailing edge (50) lying between the loading point (40) and the first connection point (20) and at least one level (51) running along the said trailing edge (50) essentially in line with the width of the trailing edge (50).

2. A control arm (10) according to claim 1, **characterized in that** the level (51) is provided along the width of the trailing edge (50).

3. A control arm (10) according to claim 1, **characterized in that** the level (51) is made of at least one recess (52).

4. A control arm (10) according to claim 3, **characterized in that** said recesses (52) are provided in multiple numbers with a predetermined space among them.

5. A control arm (10) according to claim 3, **characterized in that** there is at least one transition bevel (54) provided on at least one edge of the recesses (52).
